# EUROPEAN PATENT APPLICATION

(11) **EP 3 657 050 A1**
(43) Date of publication of application: **27.05.2020**
(21) Application number: 18207560.6
(22) Date of filing: 21.11.2018
(51) Int. Cl.: F16J 15/06, F16J 15/3296, G06K 19/07, G06K 19/077

(54) **GASKET MATERIAL AND GASKET PRODUCED THEREFROM**

(71) Applicant: Xylem Europe GmbH, 8200 Schaffhausen (CH)
(72) Inventor: BIERBAß, Volkhard, 32584 Löhne (DE)
(74) Representative: Lenzing Gerber Stute

(57) **Abstract**

The invention relates to a gasket material with a rubber or plastics based matrix (1) and embedded functional elements (2), wherein the functional elements (2) are adapted to receive and transmit radio frequency (RF) signals, and in that the functional elements (2) are adapted to be sensitive to external parameters and to react to variations of the external parameters by changing the transmitted RF signals in a characteristic way.

## Description

The present invention relates to a gasket material with the features of the preamble of claim 1, a gasket made of such a material and a gasket monitoring system.

Gaskets are known in which a plastics matrix material is equipped with functional elements in the form of reinforcing fibres or beads, which improve the mechanical strength of the gasket under stress. These gaskets may have a longer service life, but they are not adapted to facilitate monitoring of the structural integrity of the gasket.

Gaskets are essential parts of industrial installations, for example when fitting pipes or flanges together. In chemical industry and other applications, the gaskets are subject to elevated pressure, high temperature and corrosive chemicals. Therefore, gaskets have to withstand these influences. On the other hand, gasket materials are usually elastically and plastically deformable in order to adapt their shape to the corresponding surfaces to which the gaskets maintain a sealing mechanical contact.

Due to the adverse influences, gaskets are subject to ageing. Gaskets in potentially hazardous applications are therefore usually monitored and regularly inspected. At the end of the service life, gaskets have to be replaced, usually on a regular basis. On the other hand, gaskets may fail under several circumstances. For example, scratches on the surfaces of flanges, installation mistakes and mechanical imperfections of the gaskets themselves can lead to leakage. Overpressure, too high temperatures and undue mechanical stress can also shorten the service life of gaskets. In case of chemical or other industrial installations, the failure of a gasket may have severe consequences. Hazard, pollution and personal injury may occur.

It is therefore essential that the operators of industrial installations are made aware of any potential failure of the gasket in good time before a fluid medium, which is contained inside a pipe or generally within the installation, can be released to the environment. It is commonly known that the leakage of installations is monitored by checking pressure differences, installing leak detectors on the outside of the flanges and similar technologies. However, when for example a corrosive fluid penetrates 50% of the gasket and a failure can be expected in the near future, neither of the methods mentioned above will reliably produce a warning signal.

It is therefore an object of the present invention to provide a gasket material and the gasket made of such material, which enables the operator to monitor the performance of the gasket and to receive information about the weakening of the gasket material, and the gasket before a complete failure occurs. It is also an object of the invention to provide a gasket monitoring system, which automatically monitors the integrity of one or more gaskets and preferably generates an alarm in case of a weakening or failure of the respective gasket.

The object is achieved by a gasket material with the features of independent claim 1, by a gasket made of such a material and by a gasket monitoring system.

In a gasket material with a rubber or plastics based matrix and embedded functional elements, the functional elements are adapted to receive and transmit radio frequency (RF) signals and are sensitive to external parameters and react to variations of the external parameters by changing the transmitted RF signals in a characteristic way. Thus, a gasket can be fabricated from the gasket material that, upon a change of the said parameters, changes a transmittance behaviour, which in turn can then be detected and used to generate an information, e.g. an alarm signal.

It is preferred that the external parameters are one or more parameters selected from the group comprising temperature, pressure, electrical conductivity, tensile force and pH-value. An increasing temperature as such may lead to a gasket failure when a certain threshold is reached. Increased pressure may indicate that the functional element has, through a developing gap or cavity in the matrix material, gained access to the interior of the sealed containment. Changing electrical conductivity may indicate that the functional element has come into contact with an ionic liquid. A tensile force acting upon the functional element may indicate that the element is being mechanically stressed, which also means that the gasket material itself is mechanically stressed and may come close to a rupture. A change in pH may with great confidence level indicate that the functional element inside the gasket material has come into contact with an acidic or caustic medium, which is an indication that the gasket is mechanically unstable.

It is preferred that the matrix material comprises a fluorinated carbohydrate.

It is furthermore preferred under corrosive conditions (i.e. when sealing off corrosive fluids) if the matrix material comprises Polytetrafluorethylene (PTFE).

Under less corrosive conditions, it can be preferred that the matrix material comprises Polyvinylidenfluoride (PVDF).

For permanently elastic gaskets, it may be preferred that the matrix material comprises an ethylene-propylene-elastomere, and more preferably that the matrix material is Ethylene/Propylene-Dien-Terpolymer (EPDM).

The gasket material may contain a larger number of functional elements that are structurally identical and adapted to respond to RFID-signals or NFC-signals. Such a plurality of elements may monitor a larger portion of the gasket, and the elements can simultaneously or sequentially be read out.

In a preferred embodiment, a multiplicity of functional elements is provided in the gasket material, and the functional elements are adapted to transmit signals between each other, at least to one or more of the nearest neighbouring elements. This makes it possible, with a suitable programming, to use the elements to scan the entire gasket material and to gather information whether or not an area of eventually changing parameters is limited to whether more than one area or an extended area are affected.

A gasket made of the material explained above will also solve the problem of making it possible to monitor the gasket with advanced methods.

A gasket monitoring system for monitoring the structural integrity of a gasket will also solve the problem of making it possible to monitor the gasket with advanced methods when the system interrogates the functional elements and reads the signals transmitted by the functional elements, and that a warning signal is produced if one or more functional elements vary the transmitted signal with respect to a normal state, so that a change of an external parameter at the site of this at least one functional element is indicated. This may for example be carried out by using known RFID technology with passive or active transponders as functional elements.

An antenna for powering up and/or reading the functional elements by radio frequency signals may, in a preferred embodiment, be integrated in or mounted directly to a flange which is being monitored.

The gasket monitoring system may in a preferred embodiment be adapted such that the functional elements exchange signals between each other and change their response signals only if more than one functional element detects a change in an external parameter. This will increase the significance of the generated response signal, which may be an alarm signal indicating the near failure of a crucial gasket in a chemical installation.

In the following, an embodiment of the invention will be described with reference to the drawing, in which:
Fig. 1 shows a gasket material in the form of a flat sheet with a matrix and embedded functional elements;
Fig. 2 shows a gasket made from the material of fig. 1; and
Fig. 3 shows a flange equipped with a gasket and a monitoring system.

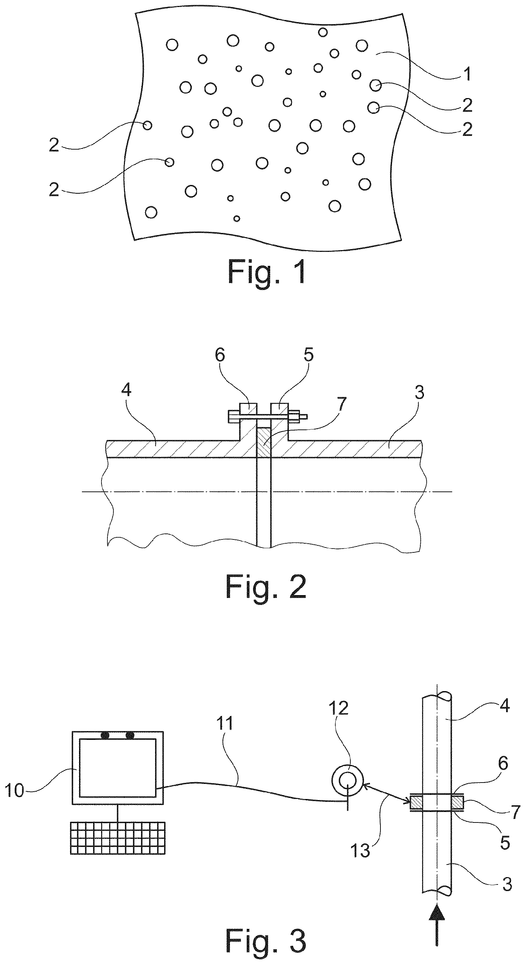

Figure 1 shows a general illustration of a gasket material in a sheet or plate form comprising a matrix material 1 and functional elements 2, which are embedded in the matrix material 1. A large number of functional elements 2 is provided, and is randomly distributed in the matrix material 1. In this embodiment, gaskets in the form of flat rings or generally flat gaskets of any shape can be cut out of the sheet. Due to the plurality of functional elements 2 which are embedded, it is tolerable if a number of functional elements 2 damaged when cutting a gasket out of the sheet, as long as there is a sufficient number of elements 2 remaining intact inside the gasket.

Other embodiments can be envisaged. It would for example be possible to provide the matrix material in granular form like batch material which is used in extrusion moulding. This batch material may contain the functional elements 2, which can already be embedded in the granules. The functional elements 2 could also be mixed with the granules of the matrix material and then be co-extruded simultaneously to form a gasket of a desired shape in the extrusion moulding process.

In both embodiments, it is preferred that the functional elements are as small as possible. Therefore, RFID tags of the passive type or NFC tags are preferred. Such tags are currently available in flat configurations with an edge length of one millimetre or slightly more. Embedding these functional elements inside the matrix material of the gasket would especially lead to good results in gaskets having a certain minimum size, for example ring shaped gaskets for circular flanges of diameters of 100 mm or more.

Other embodiments may use tags in the form of balls or beads with a diameter of, for example, 0.5 to 2.0 mm. Such tags would show an improved behaviour in extrusion moulding processes.

A flange of this type is shown in figure 2, in which a first pipe 3 and a second pipe 4 are joined together with a first flat circular flange 5, which is an integral part of the first pipe 3, and a second flat circular flange 6, which is an integral part of the second pipe 4. A gasket 7 of the type discussed above is provided between the first flange 5 and the second flange 6, wherein the gasket 7 is provided in the shape adapted to the diameter of the flanges 5 and 6 and has a rectangular cross-section. The gasket 7 is made of a matrix material 1 and embedded functional elements 2, as explained above with reference to figure 1. The pipes 3 and 4 may in use contain hot, pressurized and/or corrosive fluids, so that the gasket 7 between the flanges 5 and 6 is essential for preventing the fluids from being released to the environment.

A monitoring system for the gasket 7 is illustrated in figure 3, which shows the pipes 3 and 4 of figure 2, which are joined together at their respective flanges 5 and 6, and the gasket 7 being interposed between the flanges 5 and 6 to seal the interior of the pipes 3 and 4 from the environment.

A monitoring system is provided in the form of a computer 10, which is connected, via an RF line 11, to an RF antenna 12. The RF antenna 12 is adapted to transmit and receive radiofrequency signals, which is indicated by an arrow 13 in figure 3.

The antenna 12 cooperates with the functional elements 2 of the gasket 7 for example in the following manner:
The functional elements 2 in the gasket 7 are RFID tags which are essentially made of short sections of thin wires, which function as antennas of the RFID tags, and suitable electronics. In a very simple form of the system, the monitoring system transmits radiofrequency signals via the antenna 12 and thus activates the RFID tags inside the gasket 7. The RFID tags carry individual identification numbers as signatures, and the computer 10 evaluates the signatures which are transmitted back from the RFID tags to the RF antenna 12. As long as most or all of the RFID tags, which are identified by their individual numbers, respond to the signal that is sent via antenna 12, the computer 10 concludes that the gasket is fully functional and, after a certain wait period, repeats the process described above.

A developing mechanical failure of the gasket 7 may in this embodiment lead to corrosive fluid entering the gasket material and corroding the wire segments of the RFID tags to an extent in which the RF signals can no longer be received by the damaged RFID tags. In this case, a certain number of RFID tags would not respond, and the monitoring system will register that some individual numbers of the damaged RFID tags are missing in the response. If a predetermined number of RFID tags do not respond to the interrogation, the computer 10 may conclude that a mechanical failure of the gasket 7 has to be expected in the near future and issue an alarm indicating this potentially dangerous development.

In another embodiment, the functional elements 2 may be individual sensors for pH or temperature or other local physical values that are of relevance for the purpose. These sensors can be activated by radio frequency, microwave energy or the like, then determine the physical value and transmit the result to the monitoring system, so that the computer 10 can evaluate the status of the gasket 7. Such a monitoring system would not rely on damaging the RFID tags, as in the first example, but rather be able to evaluate transmitted data. From these data, a physical status can be derived representing the integrity of the gasket 7.

## Claims

1. A gasket material with a rubber or plastics based matrix (1) and embedded functional elements (2), **characterized in that** the functional elements (2) are adapted to receive and transmit radio frequency (RF) signals, and **in that** the functional elements (2) are adapted to be sensitive to external parameters and to react to variations of the external parameters by changing the transmitted RF signals in a characteristic way.

2. A gasket material according to claim 1, **characterized in that** the external parameters are one or more parameters selected from the group comprising temperature, pressure, electrical conductivity, tensile force and pH-value.

3. A gasket material according to claim 1, **characterized in that** the matrix material (1) comprises a fluorinated carbohydrate.

4. A gasket material according to claim 1, **characterized in that** the matrix material (1) comprises Polytetrafluorethylene (PTFE).

5. A gasket material according to claim 1, **characterized in that** the matrix material (1) comprises Polyvinylidenfluoride (PVDF).

6. A gasket material according to claim 1, **characterized in that** the matrix material (1) comprises an Ethylene-Propylene-Elastomere.

7. A gasket material according to claim 1, **characterized in that** the matrix material (1) is Ethylene/Propylene-Dien-Terpolymer (EPDM).

8. A gasket material according to claim 1, **characterized in that** the functional elements (2) are structurally identical and adapted to respond to RFID-signals (13) or NFC-signals.

9. A gasket material according to claim 1, **characterized in that** the functional elements (2) are adapted to transmit signals (13) between each other, at least to one or more of the nearest neighbouring elements.

10. A gasket (7) made of the material according to any one of the preceding claims.

11. A gasket monitoring system for monitoring the structural integrity of a gasket (7) according to claim 10, **characterized in that** the system interrogates the functional elements (2) and reads the signals (13) transmitted by the functional elements (2), and that a warning signal is produced if one or more functional elements (2) vary the transmitted signal (13) with respect to a normal state, so that a change of an external parameter at the site of this at least one functional element (2) is indicated.

12. A gasket monitoring system according to claim 11, **characterized in that** the functional elements (2) exchange signals between each other and change their response signals (13) only if more than one functional element (2) detects a change in an external parameter.
